# EUROPEAN PATENT SPECIFICATION

(11) **EP 1 939 860 B1**
(45) Date of publication and mention of the grant of the patent: **18.03.2009**
(21) Application number: 06024859.8
(22) Date of filing: 30.11.2006
(51) Int. Cl.: G10L 15/28, G10L 15/22, G10L 15/26

(54) **Interactive speech recognition system**
Interaktives Spracherkennungssystem
Système de reconnaissance de la parole interactif

(43) Date of publication of application: 02.07.2008
(73) Proprietor: Harman Becker Automotive Systems GmbH, 76307 Karlsbad (DE)
(72) Inventor: König, Lars, 89075 Ulm (DE); Saam, Rainer, 89077 Ulm (DE); Gossenberger, Andreas, 89075 Ulm (DE)
(74) Representative: Grünecker, Kinkeldey, Stockmair & Schwanhäusser Anwaltssozietät

(56) References cited:
- EP-A2- 1 197 950
- DE-C1- 19 709 518
- US-A1- 2005 055 210
- US-A1- 2006 074 661
- DESHMUKH N ET AL: "Hierarchical search for large-vocabulary conversational speech recognition: working toward a solution to the decoding problem" IEEE SIGNAL PROCESSING MAGAZINE, IEEE SERVICE CENTER, PISCATAWAY, NJ, US, vol. 16, no. 5, September 1999 (1999-09), pages 84-107, XP002249037 ISSN: 1053-5888

## Description

### FIELD OF THE INVENTION

The invention relates to an interactive speech recognition method for recognizing an input spoken phrase, an interactive speech recognition system and a computer-readable medium.

### RELATED ART

With rapid spread of application systems that are operated by voice, the requirement of reliable speech recognition systems becomes important more and more.

Difficult problems for speech recognition systems are the different speaker genders, ages, accents, speaker vocabularies, level of noise and different environments.

Generally, a speech recognition system first transforms a digitized speech signal into a set of useful characteristics, like frequency or energy level at a fixed rate, typically once every 10-20 milliseconds. Further, human speech generally comprises a sequence of single phones. Phonetically similar phones are grouped into phonemes, which may differentiate between utterances. In speech recognition, phonemes of a language are modeled by a Hidden Markov Model (HMM), whereby each status of the Hidden Markov Model is described by a probability density function. Hidden Markov Models are suitable for speech recognition as a speech signal could be viewed as a short-time stationary signal in the range of 10-20 milliseconds. Through combining a plurality of Hidden Markov Models, the most likely words can be recognized.

One of the major problems encountered in speech recognition is the time variation of the input words. For example, vocals are pronounced with different speeds in the respective language. Another problem is the orthographic or phonetic similarity of words, which can be solved only by considering the context of the previously input words or by requesting the user for supplementary input.

Speech recognition systems are discussed and proposed in many papers and by many patents. In US2006/0074661 a navigation apparatus is presented that carries out speech recognition of a user's free speech, wherein keywords included in the content of the recognized speech are searched from a dictionary database, and then these words are displayed as keywords of a "Point of Interest" search. Most errors occur in the first phonetic symbol of a misrecognized word. The proposed apparatus makes it possible to correct misrecognition of keywords by user operation. If a correction of a keyword is required, the words are displayed and the user is requested to select the correct keyword from the displayed words.

US 2005/0055210 A1 relates to a method and an apparatus for performing speech recognition using a dynamic vocabulary. Therewith, the document addresses the problem of producing inaccurate or incomplete results upon the attempt of recognizing a verbal request input to the speech recognition system, which is not phrased to exactly match a data item in the system's database. In order to improve the accuracy of search results and to simplify subsequent recognition passes, results from a preliminary speech recognition pass are used to update or refine a language model. This iterative process reduces the number of alternative proposed data matches produced during each speech recognition pass and the time required to process subsequent passes and thus makes the speech recognition process faster, more efficient and more accurate.

In for example a vehicle-based navigation apparatus, due to the possibility of misrecognition in the case of speech input, the recognition result needs to be confirmed by speech output or by a displayed keyboard on a touch panel or a remote control provided in a navigation apparatus. In conventional speech recognition systems the whole spoken phrase is output acoustically or visually at a display the user has to choose from. Thus, the whole spoken address has to be input again by speech and the system tries to recognize the address once again or the user has to read the whole address on a display and to confirm the correct address.

The repetition of the whole spoken input, if one word was not recognized, typically requires further user interaction in order to correctly detect the whole spoken phrase. However, even in the method where a software keyboard on a touch panel or a remote control is operated, many actions must be repeatedly carried out for correcting misrecognition, and this may be troublesome and dangerous in an environment such as an automobile. Further, this method loses the simple operation and the convenience by the hands-free operation that are the merits of speech recognition.

Moreover, the problem of increasing costs due to the need of more storage capacity for storing a large number of addresses, media libraries, etc. has not been solved satisfactory in the current speech recognition systems.

Solving these shortcomings would be a great benefit for increasing the user-friendliness and for reducing the costs of speech recognition system due to an intelligent memory management.

### Summary of the invention

Hence, there is the need to improve the memory management of the system. Connected to this need, it may also be desirable to keep the costs for the system memory at a minimum. To enhance the safety in, for instance, the road traffic, a further need is to reduce user interaction to a minimum level.

At least one of these needs is addressed and solved by the subject matter of the independent claims. Advantageous embodiments are subject to the dependent claims.

One aspect of the invention is to match reference terms to terms of an input spoken phrase. Depending on the memory capacity various alternative concatenations of matched reference terms are formed. For example, these concatenations may be maintained as long as enough memory capacity is available for loading a respective list of reference terms for each of the previously matched reference terms. If the memory capacity then would be exceeded, the user may be requested for supplementary input to decrease the number of stored concatenations of matched reference terms and therewith reduce the required space in memory for loading lists corresponding to the remaining matched reference terms/concatenations.

One advantage of the invention may be that a speech recognition system can be provided that saves resources. Further, the speech recognition system may only require supplementary user input for single terms of the originally input spoken phrase instead of requesting for a complete repetition of the spoken phrase in case of the memory capacity is exceeded. The request for supplementary user input of the system may for example take into account both, phonetic and orthographic similarity.

According to the invention, there are provided methods for recognizing a spoken phrase as set forth in claims 1 and 23, an interactive speech recognition system as set forth in claim 20 and a computer-readable medium storing instructions that cause the interactive speech recognition system to recognize a spoken phrase as set forth in claim 22. Preferred embodiments are set forth in the dependent claims 2-19 and 21.

The following exemplary embodiments of a speech recognition system may for example be realized in a navigation system in a vehicle-based environment or in a mobile device such as a Personal Digital Assistant, handheld device, mobile phone or the like.

### BRIEF DESCRIPTION OF THE DRAWINGS

In the following the invention is described in more detail in reference to the attached figures and drawings.
- **Fig. 1**: illustrates the terms and categories of an exemplary input spoken phrase according to an exemplary embodiment of the invention,
- **Fig. 2**: illustrates a general implementation of a navigation system or a board computer in a vehicle-based environment according to an exemplary embodiment of the invention,
- **Fig. 3**: illustrates the hardware modules of the speech recognition system according to an exemplary embodiment of the invention,
- **Fig. 4**: illustrates a search path tree with the concatenated matched reference terms forming a path, when implemented in a navigation system according to an exemplary embodiment of the invention,
- **Fig. 5**: illustrates a search path tree with the concatenated matched reference terms forming a path, when implemented in a media library, wherein a path may uniquely identify a plurality of entries of a database according to an exemplary embodiment of the invention,
- **Fig. 6**: illustrates the flow chart with the necessary steps for performing speech recognition according to an exemplary embodiment of the invention, and
- **Fig. 7**: illustrates the flow chart with the necessary steps for performing speech recognition according to an exemplary embodiment of the invention.

### DETAILED DESCRIPTION OF THE INVENTION

Before discussing the different exemplary embodiments of the invention in further detail, several terms frequently used herein will be defined in the following.

A database typically consists of a collection of several database entries. Each database entry may itself comprise a number of different fields, wherein all database entries may typically comprise the same number of different fields. Each field may be associated to a category, which will be outlined below in more detail.

The database may for example be a media library, comprising digital music files, video, games or the like. For example, in one embodiment of the invention the database is realized as an SQL internal/external (online) database (SQL = Structured Query Language). Considering for example a media library of digital music files, same may comprise a collection of songs that could be for example characterized by genre, artist and title. These characteristics may be considered to be each associated with a category.

In a further embodiment of the invention, the database also may contain entries of worldwide, continent-wide or country-wide destinations and/or points-of-interest (POIs). A destination and/or point of interest may be considered to comprise several fields such as for example country, (optionally) state, city, street name, house number, suffix for the house number, supplementary information, etc.

In another embodiment of the invention commands for operating a board computer and/or to control vehicle-based devices are stored in the database. When operating a vehicle device, for instance each command may for example comprise a field indicating the unit to be controlled (e.g. "air condition") which for example corresponds to the highest category, followed by the field indicating the operation to be performed (e.g. "temperature") which may correspond to a next category. According to the exemplary input spoken phrase "Please set the temperature of the air condition to 20 degrees", the term "air condition" denotes the highest category. The term "temperature" may correspond to a next category, followed by the term "20 degrees", which may correspond to the lowest category of this example.

Another option may be that the database comprises entries of different types, such as media, destinations, points-of-interest, board computer commands, etc.

As mentioned above, each of the fields of the entries of the database may be associated to a category. For instance, the countries of a navigation system's database may be defined as corresponding to the highest category. The next category may denote the city of a destination, the subsequent category could be the street name, and so on. The entries of the respective fields of the database are denoted as reference terms.

Similarly, for a media library, the song title "Madman across the water" may for instance be a reference term of the category "title". As soon as a query is received by the database from the speech recognition system, lists of appropriate reference terms may be generated according to the category indicated in the query. For example, if the first query indicates the highest category, a list of countries is returned to the speech recognition system. As explained in detail below, the next query of the next category may return a list of cities within the country, previously determined by the speech recognition system at the previous category, from the database.

The order in which the different categories are processed by the speech recognition system may depend on different factors, such as the application to be launched or function to be controlled, the type of the database entry to be designated, etc. If for example, the speech recognition system is used in conjunction with a navigation system of a vehicle, and if the vehicle is for example located in Europe, the speech recognition system may process an input spoken phrase (e.g. a driving destination for the navigation system) using the following order of the categories of the database entries: country, city, street name, etc. If the vehicle was located in the US for example, the categories may be processed in a different order, beginning with state, followed by city, street name, etc.

Points of interest for example, may only be defined by two categories, which may be for instance "City hall in New York". The user may use the key word "Point of interest" in his spoken phrase. Then the speech recognition system may load the list of reference terms of the category "points of interest" of "New York", wherein the reference terms may be associated with unique addresses in the database.

When using the speech recognition system to recognize entries of a digital music file library, a free search may be for example used possible without hierarchical ordered categories.

Generally, category n may indicate a specific category out of a total of N categories. Accordingly, category n-1 may denote the category preceding category n. Category n+1 may be processed after category n.

A spoken phrase is the complete utterance, input by the user. Based on the spoken phrase the speech recognition system tries to uniquely identify one entry of the database. For instance, an input navigation destination mostly identifies one unique address of the database. In another embodiment of the invention, a spoken phrase can also uniquely identify a plurality of entries of the database. Assuming, the user intends to listen to all songs of an album of an artist, several titles have to be addressed and selected by the speech recognition system.

According to a further embodiment of the invention, the spoken phrase consists of a plurality of terms, which may be identified by the speech recognition system as parts of the input utterance. A term may be defined as either a single word like "Melbourne" or a concatenation of words that form for example a command like "Please, drive me to". These terms have to be determined prior to the start of a speech recognition process out of the spoken utterance.

Then, the speech recognition system tries to match the reference terms of the respective categories to terms of the input spoken phrase to thereby obtain one or more concatenations of matched reference terms of different categories (also denoted "paths") that each concatenation identifies an entry of the database.

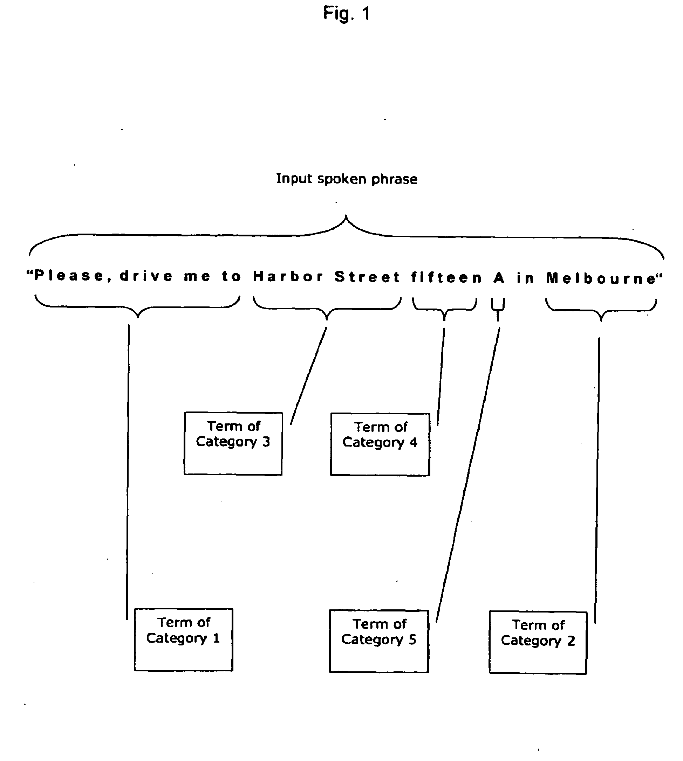

Fig. 1 illustrates a spoken phrase with its terms and associated categories of this example according to an exemplary embodiment of the invention. The spoken phrase may be "Please drive me to Harbor Street fifteen A in Melbourne". First, the term "Please drive me to" may be determined as corresponding to the highest category 1, which may be the command that indicates which application is to be launched or which unit is to be controlled. In this example, the navigation system is requested to calculate a route to a given destination. Then, the term "Melbourne" may be defined as corresponding to the next category 2. The term "Harbor Street" of the input destination address may be defined as corresponding to the next category 3. Next, the term "fifteen" may correspond to category 4 and the term "A" may correspond to the lowest category. Generally, the application or unit to be controlled may be specified by the matched reference term of the highest category. The hierarchical structure of the following categories may depend on the matched reference term of the highest category.

A matched reference term of category n denotes a reference term that can be matched to a term of the spoken phrase. For example when operating a navigation system (including or co-operating a speech recognition), the input phrase may be "Please, drive me to Melbourne". For this example, the command "please, drive me to" is considered as one term. Further, "Melbourne" is considered as another term of this example. The speech recognition system may match the reference term "Melbourne" of Australia to an input term of the spoken phrase, but may also match the reference term "Melbourne" of Florida, USA.

A list of reference terms is defined as a list of the content of the fields of the database corresponding to the requested category. This list may be for example retrieved from the database by means of a request. As a parameter of the request one or more matched reference terms of one or more previously processed categories may be used. For example, a list of reference terms returned by the database in response to the query for street names with the parameters "USA, Melbourne" would return all the names of all streets in Melbourne, USA. Using SQL, the request may have the following format SELECT streets FROM database WHERE country='USA' AND city=' Melbourne'. Accordingly, the query for street names using no parameter would return a list of all street names contained in the database irrespective of a particular city (and country) (e.g. using SQL, SELECT streets FROM database).

A path is a concatenation of matched reference terms of the various categories. One or more paths may be dynamically built and/or eliminated in the process of matching reference terms. If, for instance, no further reference term can be matched to a term of the spoken phrase at category n, the respective path may be eliminated. For example, if for the path with the city "Melbourne" (Australia) no reference term for the term "Townhallstreet" of the spoken phrase can be matched, the path containing "Melbourne" (Australia) may be deleted. In contrast thereto, concerning the city "Melbourne" (Florida), a respective reference term of category "street" may be matched to the term "Townhallstreet" of the spoken phrase, for example.

Further, the expression phonetic similarity denotes cases where at least two reference terms can be matched to one term of the spoken phrase, wherein the matched reference terms represent terms that have a different orthography but the same pronunciation. For example, the reference terms "Harbor Street" and "Harberstreet" may be matched to the term "Harbor Street" of an input spoken phrase.

The following paragraphs will describe various embodiments of the invention. It should be noted that the invention may be advantageously used for example in connection with a vehicle-based entertainment, navigation and information processing device, but the invention is not limited to its use in this particular exemplary vehicle-based environment.

One aspect of the invention is to improve the memory management of the speech recognition system. This may be realized by only loading reference terms of a respective category to the memory. The speech recognition system identifies one or more terms in the input spoken phrase, wherein each term may correspond to a respective category of importance. If, for instance, the user of a speech recognition system wants to listen to a song of a media library, he/she may input the artist and title of the desired song. After the spoken phrase has been input by the user, the speech recognition system may send a query to the database and retrieves a list of reference terms including all artists stored on the database.

The list of reference terms of the highest category is stored in a list memory. Subsequently, each reference term is compared to each term of the spoken phrase. As soon as all loaded reference terms have been compared to the terms of the spoken phrase and at least one reference term has been matched to a term of the spoken phrase, the search and matching process has been completed for this respective category. Each matched reference term may be added to a respective path (i.e. denotes the first element of the respective path). The matching process of the at least one path of at a respective category may be considered as an iteration step of the speech recognition process.

According to the next lower category, which may for example correspond to the title of the song, the at least one matched reference term (title) may be concatenated with the respective matched reference terms of the previous category. In order to keep the occupancy of the list memory at a minimum level, path(s) for which no reference term is found in the presently processed category are deleted.

Hence, the speech recognition system effectively uses the available memory by only loading the lists of reference terms according to the respective category. That is, for the example of the digital music file, first the list of artists may be loaded and compared to the terms of the spoken phrase. If then the artist, like "Madonna" as an example has been matched to a term of the spoken phrase, the list of artists is unloaded and all available song titles of "Madonna" are loaded. This procedure is much more efficient in respect of memory occupancy than loading for example lists with all artists and titles simultaneously.

Another aspect of the invention is to reduce the necessary interaction between the speech recognition system and the user. According to one embodiment of the invention, considering terms of the spoken phrase instead of performing speech recognition with a complete utterance, is much more effective in respect of the necessary user interaction.

For example, the spoken phrase may be "I want to listen to the song Fever from Madonna". When performing speech recognition with the whole utterance, the system may have problems to find a reference term for "I want to listen to" and may ask for a repetition of the spoken phrase. According to the invention, the speech recognition system may only consider the terms "Madonna" and "Fever" of the spoken phrase. As the system may allow an arbitrary order of input terms, a reduction of necessary requests for supplementary user input may be achieved. Even in case supplementary user input is necessary, the speech recognition system may only require correction of individual terms and not the repetition of the whole spoken phrase. This may enhance the safety in road traffic significantly.

A second measure to reduce the user interaction is to effectively load lists of reference terms to the list memory. As the list memory may be operated at full capacity, many possible paths can be pursued so as not having to request the user for supplementary input. The system further may eliminate the paths, which do not have suitable corresponding reference terms at the respective categories.

Thus, the speech recognition system of the invention provides an effective operating system that addresses the need of an enhanced memory management and the reduction of user interaction.

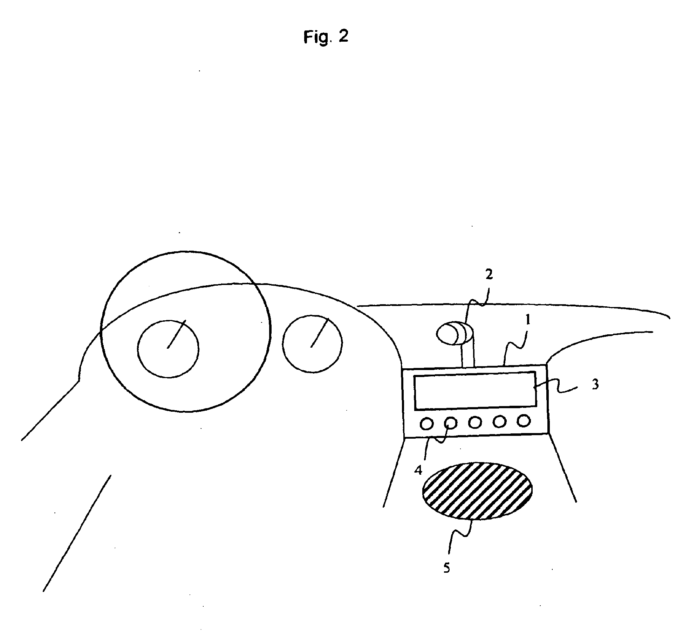

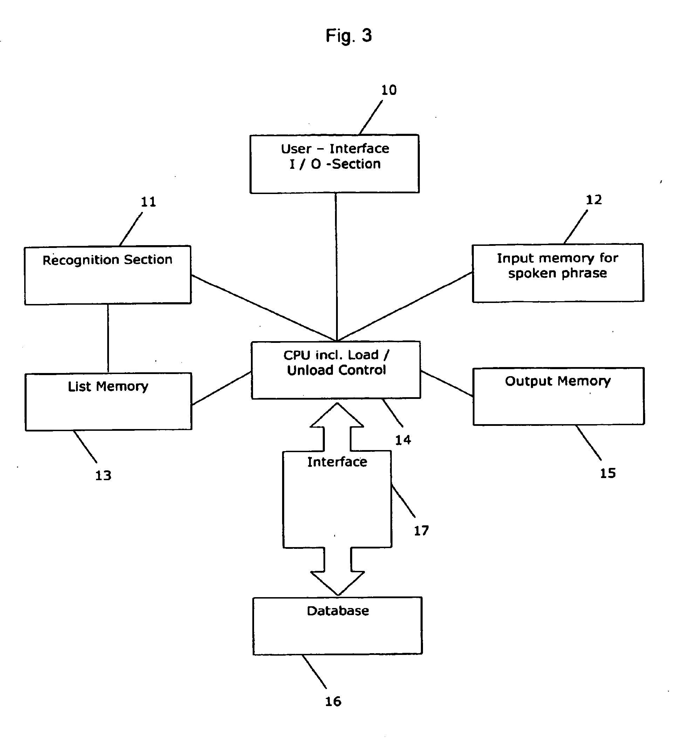

An example, how a navigation system or a board computer may be implemented in an automotive environment according to an exemplary embodiment of the invention is shown in Fig. 2. The system may for example comprise a navigation system 1 comprising all processing means for performing speech recognition and the database. A microphone 2 may be provided in the interior of the vehicle for inputting a spoken phrase. Further, the navigation system may for example comprise a touchpad display for interacting with the user visually and if necessary, a soft keyboard may be displayed at the display 3 to enable user input. Alternatively, or in addition the navigation system also may comprise keys or buttons 4 for enabling user input. These keys or buttons may be for example on the steering wheel and may be advantageous for the user respectively user-friendliness to not distract the user from the road traffic. A speaker 5 is also provided for example to acoustically output information and requests to the user. The display could be for example also provided as a head-up display projecting the information on the windscreen within the user's visual field. The hardware modules being necessary for speech recognition and their realization in for example the navigation system 1 are shown in Fig. 3.

Fig. 3 shows a plurality of hardware modules that may be comprised in the speech recognition system according to an exemplary embodiment of the invention. A user interface 10 may be implemented for inputting a spoken phrase by the user and for outputting a request for supplementary user input. This may be performed by employing microphone 2 or soft keyboard of display 3 or keys 4 for the input and display 3 and/or speaker 5 for the output.

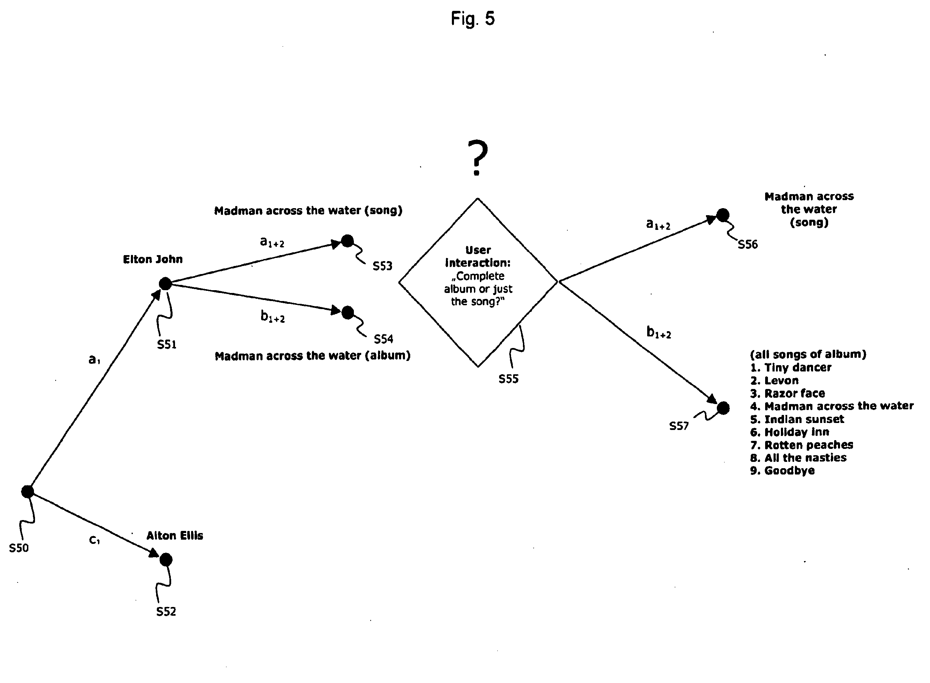

Further, an input memory 12 stores the input spoken phrase. As described below with respect to Fig. 5, the processing unit 14 of the speech recognition system is capable of sending a query to database 16 via interface 17 to obtain a list of reference terms. Further, the processing unit 14 may load the received list of reference terms from the database 16 to a list memory 13. The database may comprise at least one permanent storage medium such as a hard drive, DVD, CD or other optical storage medium for storing digital music files, movies, navigation destinations, point of interests, commands or the like. A recognition section 11, connected to the list memory 13 and to the processing unit 14, may be capable of comparing each of the reference terms stored in the list memory 13 with the terms of the spoken phrase stored in an input memory 12. The paths including a concatenation of matched reference terms may be stored in an output memory 15.

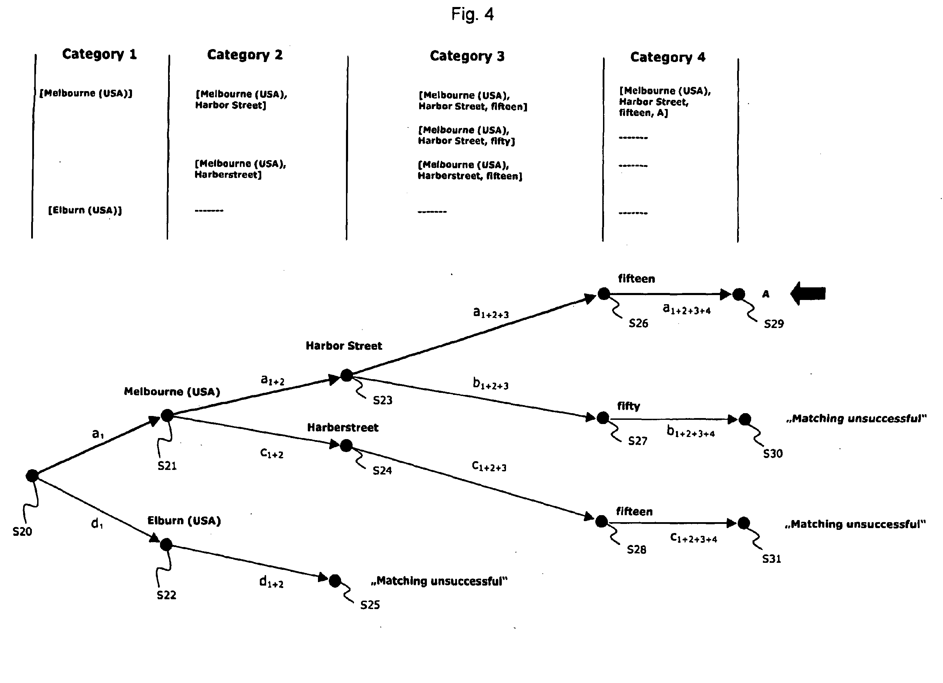

Fig. 4 exemplary shows how a speech recognition system could be operating when implemented in a navigation system of a vehicle according to an exemplary embodiment of the invention. For this example, it is assumed for exemplary purposes that the input destination address respectively input spoken phrase being "Please drive me to Harbor Street fifteen A in Melbourne". Here it is assumed for simplicity that the speech recognition system is only used for controlling the navigation system, so that it may not be necessary to determine from the spoken phrase which application is to be launched or which unit Is to be controlled. First, the speech recognition system may optionally determine the country of the destination. It may be assumed that the destination is located within the same country as to the point of time the spoken phrase is input. In one embodiment of the invention, the country could be (automatically) preselected based on the current location of the vehicle, which may be for example determined by means of a GPS receiver. Alternatively, the user may be asked to pre-select a country manually. This preselected country may then be used as a basis for step S20.

According to the explanations above, the speech recognition system starts with the highest category (category 1 in this example) and loads the cities of the respective country (in this example USA). The speech recognition system compares each reference term (each city) of the loaded list with each term of the input spoken phrase. After having terminated the search run of the highest category, it may be supposed that two reference terms are found by considering orthographic and/or phonetic similarity of the matched reference terms. In this example, the cities of USA "Melbourne" and "Elburn" are matched to one term of the spoken phrase.

### Result for search run of category 1:

| | |
|---|---|
| **[Melbourne (USA)]** | **Path a₁** |
| **[Elburn (USA)]** | **Path d₁** |

In the case no country has been preselected, the search run for the cities may end with more than two cities. For example, these matched cities might be "Melbourne" (Australia), "Melbourne" (USA), "Elburn" (USA) and "Malborn" (Germany).

The example will be proceeded with paths a₁ and d₁, which represent the matched cities of USA. The system maintains both paths (a₁ and d₁) as it cannot be determined whether already one path is invalid for the destination address of the spoken input as the street names have not been matched at this stage.

Further, in one embodiment the processing unit may determine in between the search runs (i.e. after each search for a particular category) whether already one path uniquely identifies a database entry, i.e. in this example a destination. If yes, the calculation of a route to the destination may be started.

The processing unit may determine whether there is sufficient storage capacity for loading a list of street names for each of the two cities matched at the current category. If the memory capacity would be exceeded when loading the list of street names for both cities, the system may request the user for supplementary input. In particular, the user may for example be requested to select one of the two cities. To the contrary, if enough memory capacity is available, the two paths may be kept stored and the list of cities is unloaded. Then, a query for all street names for the city "Melbourne" (USA) and "Elburn" (USA) is sent to the database. The reply may be two lists of reference terms according to the next category (category 2 in the example), e.g. the street names, which are then loaded into the list memory 13.

The system proceeds with node S21 which represents the current end of path a₁ and may search in the respective loaded reference list for "Melbourne" (USA) for a term respectively street name that is contained in the input spoken phrase. In the example, two street names could be matched to the term "Harbor Street" of the spoken phrase. In particular, these are "Harbor Street" (path a₁₊₂) and "Harberstreet" (path C₁₊₂). Consequently, the path is split and extended to node S23 respectively S24. The same procedure is applied to the city "Elburn" (USA), where no reference term respectively street name could be matched to a term of the input spoken phrase as there might be no valid street name for this city which is orthographic or phonetic similar to the term ("Harbor Street") of the spoken phrase (S25, path d₁₊₂).

The use of separate lists may be advantageous as the matched reference terms (here: street names) may be easily associated to the respective path (here: city names). If all loaded reference terms (e.g. all street names of the matched cities) were included in one list of reference terms, an allocation to the paths respectively matched cities may not be possible.

At this point it should be noted that path a₁₊₂ denotes the path from node S20 to node S21 and to node S23. Consequently, path C₁₊₂ denotes the path from node S20 to node S21 and to node S24.

### Result for search run of category 2:

| | |
|---|---|
| **[Melbourne (USA), Harbor Street]** | **Path a₁₊₂** |
| **[Melbourne (USA), Harberstreet]** | **Path c₁₊₂** |

As no reference term could be matched to a term of the spoken phrase for "Elburn (USA)", at step S25, path d₁₊₂ may be eliminated by the system, which comprises the path from nodes S20 to S22 and from nodes S22 to S25. Hence, the eliminated paths will no longer be considered in the subsequent search runs of the next categories.

Further, the processing unit could optionally again determine whether already one remaining path uniquely identifies a destination. If yes, the calculation of a route may be started.

The processing unit may optionally determine whether there is sufficient storage capacity for loading a list of house numbers for each of the matched street names. If the memory capacity would be exceeded when loading the list of house numbers for all three street names, the system may request the user for supplementary input. In particular, the user may for example be requested to select one of the two street names. If enough memory capacity is available, the two paths a₁₊₂ (S20 to S23) and C₁₊₂ (S20 to S24) may be kept stored and the lists of street names may be unloaded. Then, a query for all house numbers of the streets "Harbor Street" in "Melbourne" (USA) and "Harberstreet" in "Melbourne" (USA) may be sent to the database. The reply may be lists of reference terms according to the next category (category 3 in the example), e.g. the house numbers of the respective streets, which are then loaded into the list memory 13.

The system proceeds with node S23 which represents the current end of path a₁₊₂ and may search in the respective loaded reference list corresponding to "Harbor Street" (Melbourne, USA) for a term respectively house number that is contained in the input spoken phrase. In the example, two house numbers could be matched to the term "fifteen" of the spoken phrase. In particular, these are "fifteen" (path a₁₊₂₊₃) and "fifty" (path b₁₊₂₊₃). Consequently, the path is split and extended to node S26 respectively S27. The same procedure may be applied to the street "Harberstreet" (Melbourne, USA) at node S24, whereat only one reference term respectively house number ("fifteen", path a₁₊₂₊₃, node S28) could be matched to a term of the input spoken phrase as there might be no other valid house number for this street which is orthographic or phonetic similar to the term ("fifteen") of the spoken phrase.

### Result for search run of category 3:

| | |
|---|---|
| **[Melbourne (USA), Harbor Street, fifteen]** | **Path a₁₊₂₊₃** |
| **[Melbourne (USA), Harbor Street, fifty]** | **Path b₁₊₂₊₃** |
| **[Melbourne (USA), Harberstreet, fifteen]** | **Path C₁₊₂₊₃** |

Further, the processing unit could optionally again determine whether already one path uniquely identifies a destination. If yes, the calculation of a route may be started.

The processing unit may determine whether there is sufficient storage capacity for loading a list of suffixes for house numbers for each of the matched house numbers. If the memory capacity would be exceeded when loading the list of suffixes for house numbers of all four matched house numbers, the system may request the user for supplementary input. In particular, the user may for example be requested to select one of the two street names and/or to again input the house number. If enough memory capacity is available, the three paths (a₁₊₂₊₃, b₁₊₂₊₃, c₁₊₂₊₃) may be kept stored and the lists of house numbers may be unloaded. Then, a query for all suffixes for the matched house numbers "fifteen" and "fifty" according to the respective matched street names and with their corresponding matched city of each path may be sent to the database. The reply may be lists of reference terms according to the next category (category 4 in this example), e.g. the suffixes of the house numbers, which are then loaded into the list memory 13.

Concerning category 4, the only suffix "A" that is available for house number "fifteen" or "fifty" may for example be the house number "fifteen" in "Harbor Street" in "Melbourne, USA". Path a₁₊₂₊₃₊₄ comprising the paths from S20 to S29 may be determined as the only remaining path where after all other paths may be eliminated. In particular, path b₁₊₂₊₃₊₄ may be eliminated which comprises the paths from S20 to S30. Further, path c₁₊₂₊₃₊₄ may be eliminated which comprises the paths from S20 to S31.

### Result for search run of category 4:

| | |
|---|---|
| **[Melbourne (USA), Harbor Street, fifteen, A]** | **Path a₁₊₂₊₃₊₄** |

The processing unit determines that the remaining path an₁₊₂₊₃₊₄ uniquely identifies an entry of the address database of the navigation system. Then, an application is launched which may be the calculation of the route with the recognized address, in this example.

Summarizing, even in the case of not having clearly enough input the verbally spoken phrase, the speech recognition system may be able to identify the correct entry of the database by considering various possibilities regarding phonetic similarity of the input spoken terms, without hastily requesting the user for supplementary input.

In the example of Fig. 4, the speech recognition system refers to recognizing an input spoken phrase that uniquely identifies one entry of a database. Fig. 5 exemplary illustrates that the speech recognition system also may be capable of recognizing an input spoken phrase that uniquely identifies a plurality of entries of the database according to an exemplary embodiment of the invention.

In Fig. 5 for example, the assumed input spoken phrase is "I want to listen to Madman across the water from Elton John". This example should illustrate an example of a digital music file media library. In this example, the categories of the database may not have a hierarchical order. Thus, the returned list of reference terms may correspond to the category "title" or "album" of a digital music file for example upon a query for the highest category. But it may just as well be the category "artist". The order of the categories to be loaded may be defined by the speech recognition system or may be defined by the order of the input terms of the spoken phrase. In this example, the reference terms of the category "artist" are being determined to be loaded first. The system may also subsequently process the loading of the lists of reference terms according to the highest category "artist, the second category "album" and "title" as the third category, for example.

As already shown in the previous example of Fig. 4, the speech recognition pursues a plurality of possible paths, which will be in this example paths a₁ and b₁. In this example, the matched reference terms of the category "artist" may be "Elton John" and "Alton Ellis". Further, the system determines that for reference term "Alton Ellis" as artist no reference term of the database is available that could be matched to the album or song "Madman across the water". Consequently this particular path (b₁) may be eliminated in the further progress of the matching process. After having matched the reference term "Elton John" to a term of the spoken phrase, at step S53 (path a₁₊₂) respectively step S54 (path b₁₊₂), the system has to determine whether the matched reference term "Madman across the water" already identifies an entry of a database. As "Madman across the water" may be both, an album with a plurality of titles and a single song title, supplementary user input is required at step S55. At this step, the user may clarify which path has to be considered next by the speech recognition system. In this example, the user may select the album "Madman across the water" by verbally inputting the spoken term "album" upon a request for supplementary input at step S55. At step S57 (path a₁₊₂) all song titles corresponding to the album "Madman across the water" are determined as matched reference terms and an application for playback may be launched taking the matched reference terms (here all songs of the album) as an input parameter designating the song(s) to playback (e.g. as a playlist). If the user decides for the song only at step S56, the title "Madman across the water" is being determined to be the matched reference term only and an application is launched with the one song.

According to another embodiment of the invention, the speech recognition system may first load a list of reference terms for each of at least one category depending on the available capacity of the list memory. For example, the reference terms of the categories "album" and "title" may be loaded first. It may further be assumed that loading the list of reference terms of the category "artist" would exceed the capacity of the list memory. Then, the system attempts to match at least one reference term to at least one term of the spoken phrase. The matched reference terms may for example be "Madman across the water" (song) and "Madman across the water" (album).

After this first matching process, the matched reference terms are stored and the lists are unloaded and if not all lists of all categories previously could be loaded, the lists of reference terms of the remaining categories are loaded which will be the list of reference terms of the category "artist" in this example. The system may again attempt to match at least one reference term to at least one term of the spoken phrase. For instance, the reference terms "Elton John" and "Alton Ellis" could be matched, according to the example. After having matched the reference terms, the system may determine the most appropriate and most likely concatenation that identifies an entry of the database. Using SQL, the request of the system may for example have the following format SELECT * FROM database WHERE ((song='Madman across the water') OR (album='Madman across the water')) AND ((artist='Elton John') OR (artist='Alton Ellis')).

In this example, an entry of a digital music file database is to be identified. As a combination of the categories "album" and "title" by means of a logical "AND" function leads to the song "Madman across the water" of the album "Madman across the water" from the artist "Elton John", a logical "OR" function is used in the example to obtain the two hits, the song "Madman across the water" and the album "Madman across the water" with its corresponding songs.

In other words, in this example the matched reference terms of the same category may be combined with the logical "OR" function and moreover, the matched reference terms of different categories may be combined with the logical "OR" function as well.

However, in other situations, all matched reference terms of different categories may be combined by a logical "AND" function. This may be applied, for instance, on the matched reference terms of addresses of a navigation system.

A returned result of this exemplary query may be the two hits "Madman across the water" (album) from "Elton John" and "Madman across the water" (song) from "Elton John". As there may not have been further input by the user, the system stops at step S55 and request for supplementary input by the user to decide whether all songs are to be selected or just the one song out of the album with the same name.

Further, in another example, it is assumed for exemplary purposes that a user wants to listen to a playlist with previously determined titles. The speech recognition system may recognize the name of a playlist with its corresponding unique entries of a database and launch an application with the respective songs included in the playlist.

A similar solution may be for example applicable for a navigation system with predetermined stopover points to be hit on a certain route. These stopover points for instance may correspond to a reference term with the name of a particular route. This could be helpful for example for a sightseeing tour with several stopover destinations.

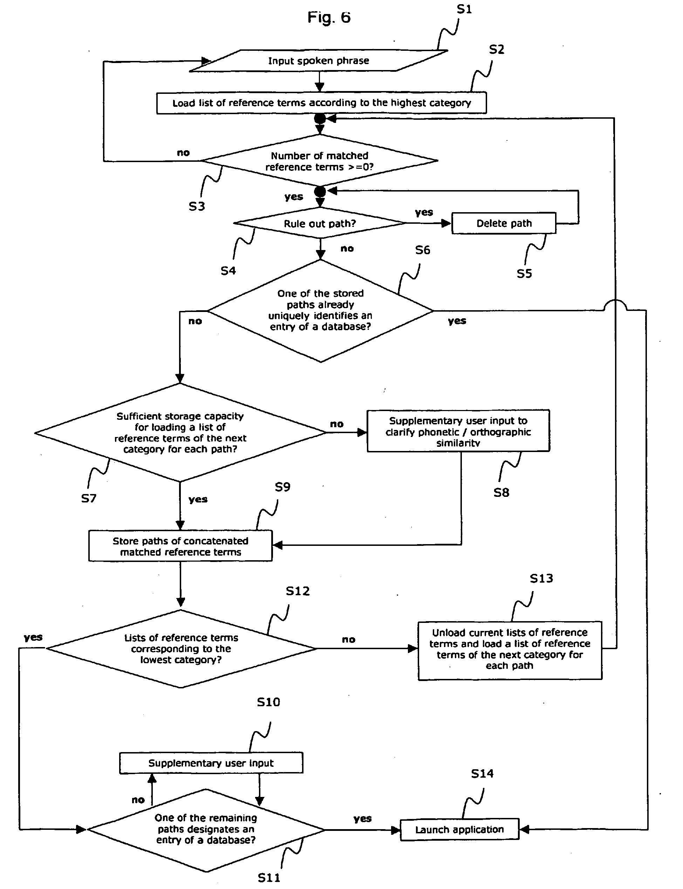

Fig. 6 illustrates an exemplary flow chart of a speech recognition process according to an exemplary embodiment of the invention. First, a spoken phrase is input by the user at step S1. Then, a list of reference terms with the highest category is loaded into the list memory 13 of the speech recognition system at step S2. The database may for example comprise all reference terms of the respective application, such as a media library, or destinations of a navigation route guidance service, or commands for operating a board computer, or commands for controlling a vehicle-based device or entries of an external online database.

As the next step, each reference term of the loaded list of reference terms is subsequently compared to each term of the input spoken phrase at step S3. If no reference term of the loaded list of reference terms can be matched to a term of the input spoken phrase, the user is requested to input the whole spoken phrase again (step S1). Next, the processing system performs step S3 again and decides if at least one reference term can be matched to one term of the input spoken phrase. As long as no reference term could be matched to a term of the spoken phrase, the steps S1 to S3 are repeatedly performed, e.g. until the user interrupts the process.

If at step S3 at least one reference term can be matched to a term of the input spoken phrase, the system proceeds with step S4. As mentioned above, a path is a concatenation of matched reference terms of the various categories that have been processed prior to the current category. At step S4 it may be decided whether a path can be ruled out due to the absence of a suitable reference term for the current category.

This may be applicable for example for path d₁₊₂ in Fig. 4, where no reference term for the term "Harbor Street" of the spoken phrase could be found. Thus, this path or other paths may be useless and may be eliminated at step S5 in a loop until no further path can be deleted.

The system continues with step S6, wherein it may be decided whether one of the stored paths already uniquely identifies an entry of a database. If so, an application may be launched or a unit may be controlled using the entry of the database (step S14). If no entry of the database can be uniquely identified by one of the stored paths, the system proceeds with step S7 for deciding, whether the storage capacity is sufficient for loading a respective list of reference terms of the next category n+1 at step S7 for each path of category n. If so, the system proceeds with step S9 and stores the paths of the concatenated matched reference terms. If at step S7 the storage capacity is not sufficient for loading a respective list of reference term of the next category n+1 for each path of category, the user is requested for supplementary input to clarify the matched reference terms in view of phonetic and/or orthographic similarity at step S8 to decrease the number of stored paths respectively the required storage memory for the list of reference terms required to be loaded at the next category n+1 for the corresponding matched reference terms.

Then, the system may proceed with step S9 to store the clarified and remaining paths of the concatenated matched reference terms. It may then be decided at step S12, whether the lists of reference terms already correspond to the lowest category. After having decided that the lists of reference terms do not correspond to the lowest category, the current lists of reference terms are unloaded and the lists of reference terms for the next category are loaded at step S13. At this step, the lists of reference terms to be loaded are the ones that correspond to the matched reference terms of the paths at category n.

If at step S12 the lists of reference terms correspond to the lowest category, the system decides at step S11 whether one of the remaining paths already uniquely designates an entry of a database. If not, the user is requested to identify the correct path out of the remaining paths by supplementary input. This may be realized by requesting clarification for one matched reference term of the previous category or one matched reference term of one of the previous categories. If the user interaction at step S10 was successful and an entry of the database is uniquely identified by a stored concatenation of matched reference terms, an application may be launched or a unit may be controlled using the entry of the database (step S14).

Summarizing the concept outlined with respect to Fig. 6, the speech recognition system keeps at least one path in its memory and decides whether for each matched reference term of the current category a respective list of reference terms for the next category n+1 can be loaded into the list memory. If the capacity of the list memory would be exceeded, the user may be requested to identify a path, respectively a matched reference term of one of the previous categories in order to reduce the remaining paths. This enables the system to cope with a restricted capacity of list memory to suitably load the lists of reference terms for the remaining paths.

By means of this example, it is evident that the safety in road traffic is enhanced due to the speech recognition system only asking for supplementary user input, if necessary. And if supplementary input is required, the system merely requests for a specific term of the spoken phrase to be clarified instead of requesting the repetition of the whole spoken phrase.

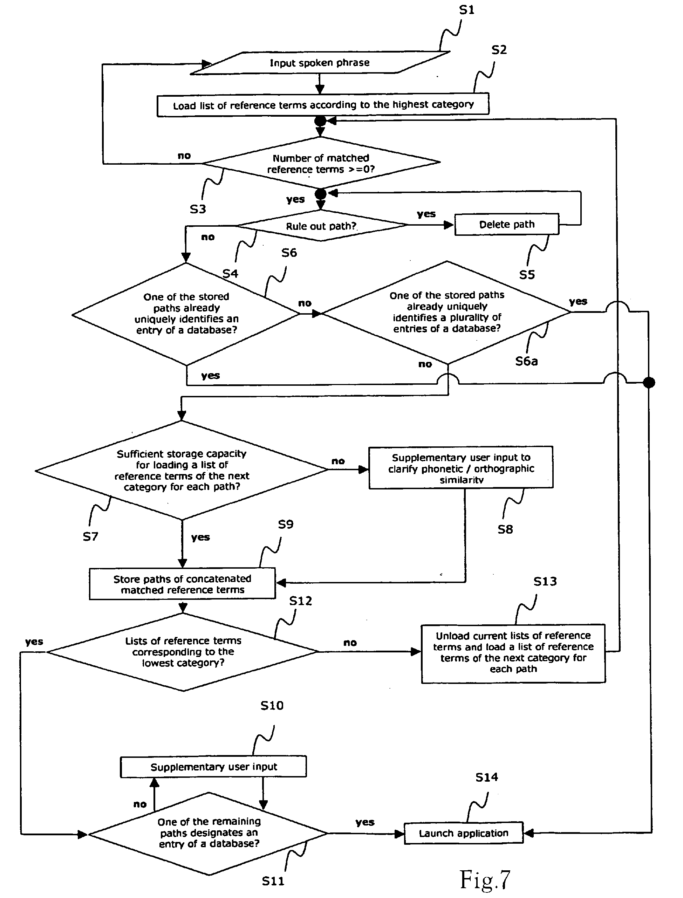

An alternative embodiment of the speech recognition system may be the implementation according to Fig. 7. Basically, the steps are similar to the ones of Fig. 6, but before step S7 is performed, it may be determined at step S6a, whether one of the stored paths already uniquely identifies a plurality of entries of a database. If so, the system may construe that a plurality of entries is intended by the user to be launched with an application if for example only the artist and title of an album are verbally input. As an alternative, the user may be requested for supplementary input for his decision in an undefined situation, before an application is launched or a unit is controlled using the entry of the database. According to the example of Fig. 5, the user can decide at step S55 between playing only one song or the whole album, which has the same name as the song.

Furthermore, the speech recognition system may also be operable by keywords. The user may input a command for controlling a device of a vehicle or to start route guidance of the navigation system or for choosing the media library prior to input a spoken phrase with the information about destination or desired song to listen to. Based on the recognized keyword, the speech recognition system may load the respective hierarchical structure of the categories prior to performing the steps of for instance Fig. 6.

Keywords may also be used for identifying the names of user created playlists for songs. The user may either know the keywords stored in the database of the speech recognition system or the system has a variety of keywords stored in the database so as to the user does not have to be trained on the stored keywords.

Another exemplary embodiment relates to situations where the speech recognition system may not be able to match a reference term of the highest category. Instead of requesting the user for repeating the spoken phrase to input (S1), the system may alternatively try to load the lists of reference terms of the next category depending on the available memory capacity and may try to match at least one reference term to a term of the spoken phrase. In one of the next categories the system may determine unsuitable paths that may be eliminated to keep the memory occupancy at a minimum level. Further, at a certain category, the reference term of the highest category may be obtained based on the matched reference terms of the category other than the first one. For example, if no city name could be matched to a term of the spoken phrase, the system may load all street names of all cities and may proceed until a concatenation reveals that a certain number of paths is invalid which may be eliminated thereupon. Based on the elimination of path(s), the previously not recognized term of a category (e.g. city) may be determined. This may further ensure to keep the user interaction for supplementary input at a minimum level.

To even provide more flexibility to the user of the speech recognition system, according to another embodiment of the invention, the terms of the input spoken phrase may further be input in arbitrary order. Moreover, the speech recognition system may also be able to provide visual output for a list of reference terms respectively paths that have to be clarified, wherein the order of the visually output list of reference terms may be based on their likelihood to be matched to a term of the spoken phrase. The system may also be adapted to acoustically request the user for supplementary input for a preset number of times, until a list is output visually, which the user chooses from by manipulating a control element.

An additional embodiment of this invention relates to a further reduction of the necessary user interaction that may be for example applied in case of the list memory being exceeded. Even more, this embodiment may be a further enhancement of the memory management. Instead of requesting the user for supplementary input after determining that the storage capacity of the list memory is not sufficient to load a respective list of reference terms of category n+1 for each path of category n, the speech recognition system may proceed with the matched reference term of the path of category n that may have the highest likelihood to be the path uniquely designating an entry of the database. A list of reference terms may be loaded according to the matched reference term of this particular path. After the matching process, within the same category, the next path to be selected is the one with the next lower likelihood to be the path uniquely designating an entry of the database. Again, the list of reference terms according to the currently selected path is loaded and the matching process is performed repeatedly, until all paths have been processed.

An exemplary spoken phrase may be "Drive me to Elizabeth Street Berkeley". First, the speech recognition system may match the reference term (city) "Berkeley" to a term of the spoken phrase and associate this matched reference term respectively path with the highest likelihood to be the path which uniquely identifies an entry of the database. The second matched reference term of this highest category may be the city "Elizabeth" of New Jersey. Assuming, the list memory would exceed when loading all street names of both matched city names, the system may first select the reference term "Berkeley" based on the highest likelihood and load all street names of "Berkeley", If for example no reference term of the loaded list can be matched to the term "Elizabeth Street" of the spoken phrase, the list of street names corresponding to the matched reference term (city) "Berkeley" may be unloaded and the path may be eliminated. Then, the list of street names corresponding to the city "Elizabeth" may be loaded and for example the reference term "Berkeley Street" may be matched to a term of the spoken phrase. Then, the path with the matched reference terms "Elizabeth" and "Berkeley Street" has become the path with the highest likelihood to be the path which uniquely identifies an entry of the database that may be considered first within the next category. For each subsequent category, the considered paths may be ordered based on their likelihood to be the path which uniquely identifies an entry of the database.

Other exemplary embodiments relate to a speech recognition system considering operating parameters for recognizing an input spoken phrase. Operating parameters could be for example at least one of a present location of a speech recognition system, a current or previous destination or a media file of a media library currently being played back or selected in a playlist, etc.

In one embodiment, an operating parameter may be used for determining the most likely path uniquely designating an entry of the database, whereas in another embodiment an operating parameter may be used for determining a reference term of a higher category than that of a term of the input spoken phrase. This latter embodiment may be advantageous in cases where the speech recognition system allows users to input e.g. the street name and house number only instead of articulating a full destination.

In an exemplary embodiment, the user may input a spoken phrase, for instance a driving destination, but the speech recognition system matches a plurality of reference terms to for example the city name of the spoken phrase. By use of an operating parameter, requesting the user for supplementary input may be e.g. prevented. The system may use the operating parameter of the current position of the vehicle to obtain the current city name by means of a GPS receiver. Subsequently it may be checked whether the current city name determined based on the GPS information matches to one of the potential city names in the spoken phrase.

Thus, the most likely path can be found by clarifying the respective reference term by means of for instance a GPS signal.

In another exemplary embodiment, the current operating parameter may be used for initially determining a reference term that is necessary for correctly recognizing an input spoken phrase.

For example, it may be assumed for exemplary purposes that the user of a navigation system is located in New York (city) and only inputs to the speech recognition system a street name and a house number as an input spoken phrase. After the system has detected that the input spoken phrase is not a full destination input, the system may first determine the term of the spoken phrase corresponding to the highest category. Then it may resolve the name of the city the speech recognition system is located at by means of for example a GPS signal which would be "New York" in the present example. This city name is then used as the reference term of the next higher category. The speech recognition system may then try to match reference terms to terms of the input spoken phrase that correspond to the operating parameter "New York". I.e., in this example, list of reference terms of category n (street name) may be loaded for a term of category n+1 ("New York") as determined based on GPS information or a previous or current navigation destination.

Another example may correspond to a music file and for example the spoken phrase only including the song title. The system then may first load the reference terms corresponding to the artist of the song that is for instance currently played.

The implementation in a navigation system may be advantageous as it allows to only input an incomplete destination, whereas a correct recognition of the spoken phrase respectively destination is still guaranteed. This may be a great benefit in order to provide more flexibility to the user of a speech recognition system.

Another embodiment of the invention relates to the implementation of the above described various embodiments of the invention using hardware and software. It is recognized that the various embodiments and examples may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

## Claims

1. A method for interactively recognizing a spoken phrase by a speech recognition system comprising the steps of:
a) loading at least one list of reference terms of category n from a database (16) into a list memory (13),
b) determining whether at least one reference term of category n can be matched to one of the terms of an input spoken phrase comprising a plurality of terms, and
c) extending at least one path of category n-1 by the at least one matched reference term of category n to form at least one path of category n,
**characterized by**
d) determining whether storage capacity of the list memory (13) is sufficient to load a respective list of reference terms of category n+1 for each path of category n,
e) if not, either eliminating at least one path of category n based on supplementary user input or eliminating all paths of category n except the path of category n with the highest likelihood to be the path uniquely designating the entry of the database (16),
f) unloading the at least one list of reference terms of category n, and
g) loading a list of reference terms of category n+1 for each path of category n.

2. The method according to claim 1, **characterized in that** there are N different categories and a path of category n contains a concatenation of matched reference terms of different categories in the interval 1 to n.

3. The method according to claims 1 or 2, **characterized in that** step e) comprises eliminating a matched reference term of category m based on supplementary user input and eliminating all paths of category n containing the eliminated matched reference term of category m.

4. The method according to claim 3, **characterized in that** upon determining that the storage capacity of the list memory (13) is not sufficient to load a respective list of reference terms of category n+1 for each path of category n in step d), eliminating a matched reference term of category other than m based on supplementary user input and eliminating all paths of category n containing the eliminated matched reference term of the category other than m.

5. The method according to one of claims 1 to 4, **characterized in that** a respective path of category n with the highest likelihood to be the path uniquely designating the entry of the database (16) is determined based on at least one parameter out of a present location of a vehicle, a current or previous destination or of a media file.

6. The method according to one of claims 1 to 5, **characterized by** further comprising the step of eliminating a path of category n-1, if no respective term in a list of reference terms at category n for the path of category n-1 matches a term in the spoken phrase.

7. The method according to one of claims 1 to 6, **characterized by** further comprising the step of determining whether for one remaining path at category n only one possible term exists in the list of reference terms for the path of category n-1 and launching an application using the entry of the database (16) designated by the path.

8. The method according to one of claims 1 to 7, **characterized by** further comprising the step of requesting for supplementary input, if having passed all categories N and more than one path of the lowest category is left.

9. The method according to one of claims 1 to 8, **characterized in that** if one path of the lowest category is left, launching an application using the entry of the database (16) designated by the path.

10. The method according to one of claims 1 to 9, **characterized in that** a path points to an entry of the database (16) representing an entry of a media library, or a destination of a navigation route guidance service, or a command for operating a board computer, or a command for controlling a device or an entry of an external online database.

11. The method according to one of claims 1 to 10, **characterized in that** the terms of the spoken phrase can be received by the speech recognition system in arbitrary order.

12. The method according to one of claims 1 to 11, **characterized in that** the terms of the spoken phrase have to be received by the speech recognition system in predetermined order.

13. The method according to one of claims 1 to 12, **characterized in that** a reference term is determined to be matched to a term, if the term of the spoken phrase and a respective reference term of a loaded list have a phonetic similarity equal to or above a threshold criterion or threshold criteria.

14. The method according to one of claims 1 to 13, **characterized in that** the speech recognition system interrupts the input of a spoken phrase, as soon as a phonetic similarity of the matched reference terms of the same category occurs, even when the capacity of the list memory (13) is sufficient.

15. The method according to one of claims 1 to 14, **characterized by** further comprising the steps of visually or acoustically outputting a list of reference terms potentially matching a term of the spoken phrase to allow the user to provide supplementary input by selecting from the list which one of the matched reference terms is to be considered for maintaining a path at a given category.

16. The method according to claim 15, **characterized in that** the order of the reference terms on the output list is based on their likelihood to be matched to terms of the spoken phrase.

17. The method according to claim 15, **characterized in that** the list is output upon exceeding a preset number of requests for acoustically providing supplementary input for matching one reference term to a term of the spoken phrase.

18. The method according to claim 15, **characterized in that** the entries of the output list are verbally selectable and, if not successful, selected by manipulating a control element.

19. The method according to one of claims 1 to 18, **characterized in that** the matched reference terms of the path are visually or acoustically confirmed by the system upon uniquely identifying an entry of the database (16).

20. An interactive speech recognition system, comprising:
a) a processing unit (14) for loading at least one list of reference terms of category n from a database (16) into a list memory (13),
wherein the processing unit (14) is operable
b) to determine whether at least one reference term of category n can be matched to one of the terms of an input spoken phrase comprising a plurality of terms, and
c) to extend at least one path of category n-1 by the at least one matched reference term of category n to form at least one path of category n,
**characterized in that** the processing unit (14) is further operable
d) to determine whether storage capacity of the list memory (13) is sufficient to load a respective list of reference terms of category n+1 for each path of category n, _
e) to either eliminate at least one path of category n based on supplementary user input or eliminate all paths of category n except the path of category n with the highest likelihood to be the path uniquely designating the entry of the database, if the processing unit (14) has determined that the storage capacity of the list memory (13) is not sufficient to load at least one list of reference terms of category n+1 for at least one path of category n,
f) to unload the at least one list of reference terms of category n, and
g) to load a list of reference terms of category n+1 for each path of category n.

21. The system according to claim 20, **characterized by** further comprising means adapted to perform the steps of the method according to one of the claims 2 to 19.

22. A computer-readable medium storing instructions that, when executed by the processing unit of an interactive speech recognition system, cause the interactive speech recognition system to recognize a spoken phrase, by
a) loading at least one list of reference terms of category n from a database (16) into a list memory (13),
b) determining whether at least one reference term of category n can be matched to one of the terms of an input spoken phrase comprising a plurality of terms, and
c) extending at least one path of category n-1 by the at least one matched reference term of category n to form at least one path of category n,
**characterized by**
d) determining whether storage capacity of the list memory (13) is sufficient to load a respective list of reference terms of category n+1 for each path of category n,
e) if not, either eliminating at least one path of category n based on supplementary user input or eliminating all paths of category n except the path of category n with the highest likelihood to be the path uniquely designating the entry of the database (16),
f) unloading the at least one list of reference terms of category n, and
g) loading a respective list of reference terms of category n+1 for each path of category n.

23. A method for recognizing a spoken phrase by a speech recognition system, comprising the steps of:
a) loading a respective list of reference terms into a list memory (13),
b) determining whether at least one reference term can be matched to at least one of the terms of an input spoken phrase comprising a plurality of terms, and
c) storing the matched reference terms and unloading the current lists of reference terms,
**characterized in that**
the list of reference terms is loaded for each of at least one category from a database (16) into the list memory (13) depending on the available capacity of the list memory (13), the method further comprising the steps of:
d) unloading the current list of reference terms and loading a list of reference terms of each of the at least one further categories and repeating steps b) and c), if not all lists of reference terms of all categories could be previously loaded, and
e) loading the lists of reference terms corresponding to the stored matched reference terms and determining the concatenation of matched reference terms that most likely identifies an entry of the database (16).

## Patentansprüche

1. Verfahren zum interaktiven Erkennen einer gesprochenen Phrase durch ein Spracherkennungssystem, das die folgenden Schritte umfasst:
a) Laden wenigstens einer Liste von Bezugs-Termen von Kategorie n aus einer Datenbank (16) in einen Listenspeicher (13),
b) Feststellen, ob wenigstens ein Bezugs-Term von Kategorie n einem der Terme einer eingegebenen gesprochenen Phrase, die eine Vielzahl von Termen umfasst, zugeordnet werden kann, und
c) Erweitern wenigstens eines Pfades von Kategorie n-1 um den wenigstens einen zugeordneten Bezugs-Term von Kategorie n, um wenigstens einen Pfad von Kategorie n auszubilden,
**gekennzeichnet durch**
d) Feststellen, ob die Speicherkapazität des Listenspeichers (13) ausreicht, um eine jeweilige Liste von Bezugs-Termen von Kategorie n+1 für jeden Pfad von Kategorie n zu laden,
e) wenn dies nicht der Fall ist, entweder Eliminieren wenigstens eines Pfades von Kategorie n basierend auf ergänzender Benutzereingabe oder Eliminieren aller Pfade von Kategorie n mit Ausnahme des Pfades von Kategorie n mit der höchsten Wahrscheinlichkeit, der Pfad zu sein, der eindeutig den Eintrag der Datenbank (16) bezeichnet,
f) Entladen der wenigstens einen Liste von Bezugs-Termen von Kategorie n, und
g) Laden einer Liste von Bezugs-Termen von Kategorie n+1 für jeden Pfad von Kategorie n.

2. Verfahren nach Anspruch 1, **dadurch gekennzeichnet, dass** N verschiedene Kategorien vorhanden sind und ein Pfad von Kategorie n eine Verkettung zugeordneter Bezugs-Terme unterschiedlicher Kategorien in dem Intervall von 1 bis n beinhaltet.

3. Verfahren nach Anspruch 1 oder 2, **dadurch gekennzeichnet, dass** Schritt e) ferner Eliminieren eines zugeordneten Bezugs-Terms von Kategorie m basierend auf ergänzender Benutzereingabe umfasst sowie Eliminieren aller Pfade von Kategorie n, die den eliminierten zugeordneten Bezugs-Term von Kategorie m beinhalten.

4. Verfahren nach Anspruch 3, **dadurch gekennzeichnet, dass,** wenn in Schritt d) festgestellt wird, dass die Speicherkapazität des Listenspeichers (13) nicht ausreicht, um eine jeweilige Liste von Bezugs-Termen von Kategorie n+1 für jeden Pfad von Kategorie n zu laden, Eliminieren eines zugeordneten Bezugs-Terms einer anderen Kategorie als m basierend auf ergänzender Benutzereingabe, und Eliminieren aller Pfade von Kategorie n, die den eliminierten zugeordneten Bezugs-Term der anderen Kategorie als m beinhalten.

5. Verfahren nach einem der Ansprüche 1 bis 4, **dadurch gekennzeichnet, dass** ein jeweiliger Pfad von Kategorie n mit der höchsten Wahrscheinlichkeit, der Pfad zu sein, der den Eintrag der Datenbank (16) eindeutig bezeichnet, auf Basis wenigstens eines Parameters von einem aktuellen Standort eines Fahrzeugs, einem aktuellen oder einem vorhergehenden Ziel oder einer Mediendatei bestimmt wird.

6. Verfahren nach einem der Ansprüche 1 bis 5, **gekennzeichnet durch** ferner den Schritt des Eliminierens eines Pfades von Kategorie n-1 umfassend, wenn kein jeweiliger Term in einer Liste von Bezugs-Termen von Kategorie n für den Pfad von Kategorie n-1 einem Term in der gesprochenen Phrase zugeordnet ist.

7. Verfahren nach einem der Ansprüche 1 bis 6, **gekennzeichnet durch** ferner den Schritt des Feststellens umfassend, ob für einen verbleibenden Pfad von Kategorie n nur ein möglicher Term in der Liste von Bezugs-Termen für den Pfad von Kategorie n-1 existiert, und Starten einer Anwendung, die den Eintrag der Datenbank (16) verwendet, der **durch** den Pfad bezeichnet wird.

8. Verfahren nach einem der Ansprüche 1 bis 7, **gekennzeichnet durch** ferner den Schritt des Anfordems von ergänzender Eingabe umfassend, wenn alle Kategorien N durchlaufen worden sind und mehr als ein Pfad der untersten Kategorie verbleibt.

9. Verfahren nach einem der Ansprüche 1 bis 8, **dadurch gekennzeichnet, dass,** wenn ein Pfad der untersten Kategorie verbleibt, Starten einer Anwendung, die den Eintrag der Datenbank (16) verwendet, der durch den Pfad bezeichnet wird.

10. Verfahren nach einem der Ansprüche 1 bis 9, **dadurch gekennzeichnet, dass** ein Pfad auf einen Eintrag der Datenbank (16) zeigt, der einen Eintrag einer Medienbibliothek oder ein Ziel eines Navigations-Routenführungsdienstes oder einen Befehl zum Bedienen eines Bordcomputers oder einen Befehl zum Steuern eines Gerätes oder einen Eintrag einer externen Online-Datenbank darstellt.

11. Verfahren nach einem der Ansprüche 1 bis 10, **dadurch gekennzeichnet, dass** die Terme der gesprochenen Phrase durch das Spracherkennungssystem in beliebiger Reihenfolge empfangen werden können.

12. Verfahren nach einem der Ansprüche 1 bis 11, **dadurch gekennzeichnet, dass** die Terme der gesprochenen Phrase durch das Spracherkennungssystem in vorgegebener Reihenfolge empfangen werden müssen.

13. Verfahren nach einem der Ansprüche 1 bis 12, **dadurch gekennzeichnet, dass** festgestellt wird, dass ein Bezugs-Term einem Term zugeordnet ist, wenn der Term der gesprochenen Phrase und ein jeweiliger Bezugs-Term einer geladenen Liste eine phonetische Ähnlichkeit haben, die einem Schwellwertkriterium oder Schwellwertkriterien entspricht oder darüber liegt.

14. Verfahren nach einem der Ansprüche 1 bis 13, **dadurch gekennzeichnet, dass** das Spracherkennungssystem die Eingabe einer gesprochenen Phrase unterbricht, sobald eine phonetische Ähnlichkeit der zugeordneten Bezugs-Terme derselben Kategorie auftritt, auch wenn die Kapazität des Listenspeichers (13) ausreicht.

15. Verfahren nach einem der Ansprüche 1 bis 14, **gekennzeichnet durch** ferner den Schritt des visuellen oder akustischen Ausgebens einer Liste von Bezugs-Termen umfassend, die potenziell einem Term der gesprochenen Phrase zugeordnet sind, um dem Benutzer zu ermöglichen, ergänzende Eingabe bereitzustellen **durch** Auswählen aus der Liste, welcher der zugeordneten Bezugs-Terme zum Beibehalten eines Pfades bei einer bestimmten Kategorie zu berücksichtigen ist.

16. Verfahren nach Anspruch 15, **dadurch gekennzeichnet, dass** die Reihenfolge der Bezugs-Terme in der ausgegebenen Liste auf deren Wahrscheinlichkeit basiert, Termen der gesprochenen Phrase zugeordnet zu werden.

17. Verfahren nach Anspruch 15, **dadurch gekennzeichnet, dass** die Liste ausgegeben wird, wenn eine voreingestellte Anzahl von Anforderungen zum akustischen Bereitstellen ergänzender Eingabe zum Zuordnen eines Bezugs-Terms zu einem Term der gesprochenen Phrase überschritten wird.

18. Verfahren nach Anspruch 15, **dadurch gekennzeichnet, dass** die Einträge der ausgegebenen Liste verbal auswählbar sind, und wenn dies nicht gelingt, durch Betätigen eines Bedienelementes ausgewählt werden.

19. Verfahren nach einem der Ansprüche 1 bis 18, **dadurch gekennzeichnet, dass** die zugeordneten Bezugs-Terme des Pfades visuell oder akustisch durch das System bestätigt werden, nachdem ein Eintrag der Datenbank (16) eindeutig identifiziert worden ist.

20. Interaktives Spracherkennungssystem, das umfasst:
a) eine Verarbeitungseinheit (14) zum Laden wenigstens einer Liste von Bezugs-Termen einer Kategorie n aus einer Datenbank (16) in einen Listenspeicher (13), wobei die Verarbeitungseinheit (14) so betrieben werden kann, dass sie
b) feststellt, ob wenigstens ein Bezugs-Term von Kategorie n einem der Terme einer eingegebenen gesprochenen Phrase, die eine Vielzahl von Termen umfasst, zugeordnet werden kann, und
c) wenigstens einen Pfad von Kategorie n-1 um den wenigstens einen zugeordneten Bezugs-Term von Kategorie n erweitert, um wenigstens einen Pfad von Kategorie n auszubilden,
**dadurch gekennzeichnet, dass** die Verarbeitungseinheit (14) ferner so betrieben werden kann, dass sie
d) feststellt, ob die Speicherkapazität des Listenspeichers (13) ausreicht, um eine jeweilige Liste von Bezugs-Termen von Kategorie n+1 für jeden Pfad von Kategorie n zu laden,
e) entweder wenigstens einen Pfad von Kategorie n basierend auf ergänzender Benutzereingabe eliminiert oder alle Pfade von Kategorie n mit Ausnahme des Pfades von Kategorie n mit der höchsten Wahrscheinlichkeit, der Pfad zu sein, der den Eintrag der Datenbank eindeutig bezeichnet, eliminiert, wenn die Verarbeitungseinheit (14) festgestellt hat, dass die Speicherkapazität des Listenspeichers (13) nicht ausreicht, um wenigstens eine Liste von Bezugs-Termen von Kategorie n+1 für wenigstens einen Pfad von Kategorie n zu laden,
f) die wenigstens eine Liste von Bezugs-Termen von Kategorie n entlädt, und
g) eine Liste von Bezugs-Termen von Kategorie n+1 für jeden Pfad von Kategorie n lädt.

21. System nach Anspruch 20, **gekennzeichnet durch** ferner eine Einrichtung umfassend, die zum Durchführen der Schritte des Verfahrens nach einem der Ansprüche 2 bis 19 angepasst ist.

22. Computerlesbares Medium, das Befehle speichert, die, wenn sie durch die Verarbeitungseinheit eines interaktiven Spracherkennungssystems ausgeführt werden, das interaktive Spracherkennungssystem veranlassen, eine gesprochene Phrase zu erkennen, durch
a) Laden wenigstens einer Liste von Bezugs-Termen von Kategorie n aus einer Datenbank (16) in einen Listenspeicher (13),
b) Feststellen, ob wenigstens ein Bezugs-Term von Kategorie n einem der Terme einer eingegebenen gesprochenen Phrase, die eine Vielzahl von Termen umfasst, zugeordnet werden kann, und
c) Erweitern wenigstens eines Pfades von Kategorie n-1 um den wenigstens einen zugeordneten Bezugs-Term von Kategorie n, um wenigstens einen Pfad von Kategorie n auszubilden,
**gekennzeichnet durch**
d) Feststellen, ob die Speicherkapazität des Listenspeichers (13) ausreicht, um eine jeweilige Liste von Bezugs-Termen von Kategorie n+1 für jeden Pfad von Kategorie n zu laden,
e) wenn dies nicht der Fall ist, entweder Eliminieren wenigstens eines Pfades von Kategorie n basierend auf ergänzender Benutzereingabe oder Eliminieren aller Pfade von Kategorie n mit Ausnahme des Pfades von Kategorie n mit der höchsten Wahrscheinlichkeit, der Pfad zu sein, der den Eintrag der Datenbank (16) eindeutig bezeichnet,
f) Entladen der wenigstens einen Liste von Bezugs-Termen von Kategorie n, und
g) Laden einer jeweiligen Liste von Bezugs-Termen von Kategorie n+1 für jeden Pfad von Kategorie n.

23. Verfahren zum Erkennen einer gesprochenen Phrase durch ein Spracherkennungssystem, das die folgenden Schritte umfasst:
a) Laden einer jeweiligen Liste von Bezugs-Termen in einen Listenspeicher (13),
b) Feststellen, ob wenigstens ein Bezugs-Term wenigstens einem der Terme einer eingegebenen gesprochenen Phrase, die eine Vielzahl von Termen umfasst, zugeordnet werden kann, und
c) Speichern der zugeordneten Bezugs-Terme und Entladen der aktuellen Listen von Bezugs-Termen,
**dadurch gekennzeichnet, dass**
die Liste von Bezugs-Termen in Abhängigkeit von der verfügbaren Kapazität des Listenspeichers (13) für jede von wenigstens einer Kategorie aus einer Datenbank (16) in den Listenspeicher (13) geladen wird, wobei das Verfahren ferner die folgenden Schritte umfasst:
d) Entladen der aktuellen Liste von Bezugs-Termen und Laden einer Liste von Bezugs-Termen jeder der wenigstens einen weiteren Kategorie und Wiederholen der Schritte b) und c), wenn nicht alle Listen von Bezugs-Termen aller Kategorien zuvor geladen werden konnten, und
e) Laden der Listen von Bezugs-Termen, die den gespeicherten zugeordneten Bezugs-Termen entsprechen, und Bestimmen derjenigen Verkettung zugeordneter Bezugs-Terme, die am wahrscheinlichsten einen Eintrag der Datenbank (16) identifiziert.

## Revendications

1. Procédé pour reconnaître de manière interactive une phrase prononcée par un système de reconnaissance vocale, comprenant les étapes consistant à :
a) charger au moins une liste de termes de référence de catégorie n d'une base de données (16) dans une mémoire de liste (13),
b) déterminer si au moins un terme de référence de catégorie n peut correspondre à l'un des termes d'une phrase prononcée entrée comprenant une pluralité de termes, et
c) étendre au moins un trajet de catégorie n-1 par ledit au moins un terme de référence correspondant de catégorie n pour former au moins un trajet de catégorie n,
**caractérisé par** les étapes consistant à :
d) déterminer si la capacité de mémorisation de la mémoire de liste (13) est suffisante pour charger une liste respective de termes de référence de catégorie n+1 pour chaque trajet de catégorie n,
e) sinon, soit éliminer au moins un trajet de catégorie n sur la base d'une entrée d'utilisateur supplémentaire, soit éliminer tous les trajets de catégorie n à l'exception du trajet de catégorie n avec la probabilité la plus élevée d'être le trajet désignant de manière unique l'entrée de la base de données (16),
f) décharger ladite au moins une liste de termes de référence de catégorie n, et
g) charger une liste de termes de référence de catégorie n+1 pour chaque trajet de catégorie n.

2. Procédé selon la revendication 1, **caractérisé en ce qu'**il existe N catégories différentes et un trajet de catégorie n contient une concaténation de termes de référence correspondants de différentes catégories dans l'intervalle 1 à n.

3. Procédé selon les revendications 1 ou 2, **caractérisé en ce que** l'étape e) comprend l'élimination d'un terme de référence correspondant de catégorie m sur la base d'une entrée d'utilisateur supplémentaire et l'élimination de tous les trajets de catégorie n contenant le terme de référence correspondant éliminé de catégorie m.

4. Procédé selon la revendication 3, **caractérisé par** l'étape consistant à, lorsqu'il est déterminé que la capacité de mémorisation de la mémoire de liste (13) n'est pas suffisante pour charger une liste respective de termes de référence de catégorie n+1 pour chaque trajet de catégorie n à l'étape d), éliminer un terme de référence correspondant d'une catégorie autre que m sur la base d'une entrée d'utilisateur supplémentaire et éliminer tous les trajets de catégorie n contenant le terme de référence correspondant éliminé de la catégorie autre que m.

5. Procédé selon l'une des revendications 1 à 4, **caractérisé en ce qu'**un trajet respectif de catégorie n avec la probabilité la plus élevée d'être le trajet désignant de manière unique l'entrée de la base de données (16) est déterminé sur la base d'au moins un paramètre parmi un emplacement actuel d'un véhicule, une destination actuelle ou précédente ou un fichier de média.

6. Procédé selon l'une des revendications 1 à 5, **caractérisé en ce qu'**il comprend en outre l'étape consistant à éliminer un trajet de catégorie n-1 si aucun terme respectif dans une liste de termes de référence de catégorie n pour le trajet de catégorie n-1 ne correspond à un terme de la phrase prononcée.

7. Procédé selon l'une des revendications 1 à 6, **caractérisé en ce qu'**il comprend en outre l'étape consistant à déterminer si, pour un trajet restant de catégorie n, un seul terme possible existe dans la liste de termes de référence pour le trajet de catégorie n-1 et lancer une application en utilisant l'entrée de la base de données (16) désignée par le trajet.

8. Procédé selon l'une des revendications 1 à 7, **caractérisé en ce qu'**il comprend en outre l'étape consistant à demander une entrée supplémentaire si, après avoir passé toutes les catégories N, plusieurs trajets de la catégorie la plus basse sont laissés.

9. Procédé selon l'une des revendications 1 à 8, **caractérisé en ce que,** si un trajet de la catégorie la plus basse est laissé, une application est lancée en utilisant l'entrée de la base de données (16) désignée par le trajet.

10. Procédé selon l'une des revendications 1 à 9, **caractérisé en ce qu'**un trajet pointe vers une entrée de la base de données (16) représentant une entrée d'une bibliothèque de médias, ou une destination d'un service de guidage de trajet de navigation, ou une commande pour mettre en oeuvre un ordinateur embarqué, ou une commande pour commander un dispositif ou une entrée d'une base de données en ligne externe.

11. Procédé selon l'une des revendications 1 à 10, **caractérisé en ce que** les termes de la phrase prononcée peuvent être reçus par le système de reconnaissance vocale dans un ordre arbitraire.

12. Procédé selon l'une des revendications 1 à 11, **caractérisé en ce que** les termes de la phrase prononcée doivent être reçus par le système de reconnaissance vocale dans un ordre prédéterminé.

13. Procédé selon l'une des revendications 1 à 12, **caractérisé en ce qu'**un terme de référence est déterminé comme correspondant à un terme, si le terme de la phrase prononcée et un terme de référence respectif d'une liste chargée ont une similarité phonétique égale ou supérieure à un critère de seuil ou à des critères de seuil.

14. Procédé selon l'une des revendications 1 à 13, **caractérisé en ce que** le système de reconnaissance vocale interrompt l'entrée d'une phrase prononcée, dès qu'une similarité phonétique des termes de référence correspondants de la même catégorie apparaît, même lorsque la capacité de la mémoire de liste (13) est suffisante.

15. Procédé selon l'une des revendications 1 à 14, **caractérisé en ce qu'**il comprend en outre les étapes consistant à délivrer visuellement ou acoustiquement une liste de termes de référence correspondant potentiellement à un terme de la phrase prononcée pour permettre à l'utilisateur de fournir une entrée supplémentaire en sélectionnant dans la liste celui des termes de référence correspondants qui doit être pris en considération pour maintenir un trajet au niveau d'une catégorie donnée.

16. Procédé selon la revendication 15, **caractérisé en ce que** l'ordre des termes de référence dans la liste de sortie est basé sur leur probabilité de correspondre à des termes de la phrase prononcée.

17. Procédé selon la revendication 15, **caractérisé en ce que** la liste est délivrée lors du dépassement d'un nombre prédéterminé de demandes pour fournir acoustiquement une entrée supplémentaire pour établir une correspondance entre un terme de référence et un terme de la phrase prononcée.

18. Procédé selon la revendication 15, **caractérisé en ce que** les entrées de la liste de sortie peuvent être sélectionnées verbalement et, si cela n'aboutit pas, sélectionnées en manipulant un élément de commande.

19. Procédé selon l'une des revendications 1 à 18, **caractérisé en ce que** les termes de référence correspondants du trajet sont confirmés visuellement ou acoustiquement par le système lors de l'identification de manière unique d'une entrée de la base de données (16).

20. Système de reconnaissance vocale interactif, comprenant :
a) une unité de traitement (14) pour charger au moins une liste de termes de référence de catégorie n d'une base de données (16) dans une mémoire de liste (13),
dans lequel l'unité de traitement (14) peut être mise en oeuvre pour
b) déterminer si au moins un terme de référence de catégorie n peut correspondre à un des termes d'une phrase prononcée entrée comprenant une pluralité de termes, et
c) étendre au moins un trajet de catégorie n-1 par ledit au moins un terme de référence correspondant de catégorie n pour former au moins un trajet de catégorie n,
**caractérisé en ce que** l'unité de traitement (14) peut en outre être mise en oeuvre pour
d) déterminer si la capacité de mémorisation de la mémoire de liste (13) est suffisante pour charger une liste respective de termes de référence de catégorie n+1 pour chaque trajet de catégorie n,
e) soit éliminer au moins un trajet de catégorie n sur la base d'une entrée d'utilisateur supplémentaire, soit éliminer tous les trajets de catégorie n à l'exception du trajet de catégorie n avec la probabilité la plus élevée d'être le trajet désignant de manière unique l'entrée de la base de données si l'unité de traitement (14) a déterminé que la capacité de mémorisation de la mémoire de liste (13) n'est pas suffisante pour charger au moins une liste de termes de référence de catégorie n+1 pour au moins un trajet de catégorie n,
f) décharger ladite au moins une liste de termes de référence de catégorie n, et
g) charger une liste de termes de référence de catégorie n+1 pour chaque trajet de catégorie n.

21. Système selon la revendication 20, **caractérisé en ce qu'**il comprend en outre des moyens adaptés pour effectuer les étapes du procédé selon l'une des revendications 2 à 19.

22. Support pouvant être lu par un ordinateur mémorisant des instructions qui, lorsqu'elles sont exécutées par l'unité de traitement d'un système de reconnaissance vocale interactif, amènent le système de reconnaissance vocale interactif à reconnaître une phrase prononcée, en
a) chargeant au moins une liste de termes de référence de catégorie n d'une base de données (16) dans une mémoire de liste (13),
b) déterminant si au moins un terme de référence de catégorie n peut correspondre à un des termes d'une phrase prononcée entrée comprenant une pluralité de termes, et
c) étendant au moins un trajet de catégorie n-1 par ledit au moins un terme de référence correspondant de catégorie n pour former au moins un trajet de catégorie n,
**caractérisé par** les étapes consistant à
d) déterminer si la capacité de mémorisation de la mémoire de liste (13) est suffisante pour charger une liste respective de termes de référence de catégorie n+1 pour chaque trajet de catégorie n,
e) sinon, soit éliminer au moins un trajet de catégorie n sur la base d'une entrée d'utilisateur supplémentaire, soit éliminer tous les trajets de catégorie n à l'exception du trajet de catégorie n avec la probabilité la plus élevée d'être le trajet désignant de manière unique l'entrée de la base de données (16),
f) décharger ladite au moins une liste de termes de référence de catégorie n, et
g) charger une liste respective de termes de référence de catégorie n+1 pour chaque trajet de catégorie n.

23. Procédé pour reconnaître une phrase prononcée par un système de reconnaissance vocale, comprenant les étapes consistant à :
a) charger une liste respective de termes de référence dans une mémoire de liste (13),
b) déterminer si au moins un terme de référence peut correspondre à au moins l'un des termes d'une phrase prononcée entrée comprenant une pluralité de termes, et
c) mémoriser les termes de référence correspondants et décharger les listes actuelles de termes de référence,
**caractérisé en ce que**
la liste de termes de référence est chargée pour chacune d'au moins une catégorie d'une base de données (16) dans la mémoire de liste (13) en fonction de la capacité disponible de la mémoire de liste (13), le procédé comprenant en outre les étapes consistant à :
d) décharger la liste actuelle de termes de référence et charger une liste de termes de référence de chacune desdites au moins une autres catégories et répéter les étapes b) et c), si toutes les listes de termes de référence de toutes les catégories n'ont pu être chargées au préalable, et
e) charger les listes de termes de référence correspondant aux termes de référence correspondants mémorisés et déterminer la concaténation des termes de référence correspondants qui identifient le plus vraisemblablement une entrée de la base de données (16).
